# EUROPEAN PATENT SPECIFICATION

(11) **EP 4 461 096 B1**
(45) Date of publication and mention of the grant of the patent: **01.10.2025**
(21) Application number: 23700170.6
(22) Date of filing: 05.01.2023
(51) Int. Cl.: H05B 47/13, F21S 8/02, F21V 23/04, F21V 29/77, F21V 29/83, F21Y 103/33, F21Y 115/10

(54) **METHOD FOR ROBUSTLY AND RELIABLY DETECTING OCCUPANCY**
VERFAHREN FÜR ROBUSTE UND ZUVERLÄSSIGE BELEGUNGSERKENNUNG
PROCÉDÉ DE DÉTECTION DE PRÉSENCE ROBUSTE ET FIABLE

(30) Priority: 05.01.2022 BE 202205001; 10.06.2022 BE 202205456; 10.06.2022 BE 202205457
(43) Date of publication of application: 13.11.2024
(73) Proprietor: Prado Europe B.V., 8620 Nieuwpoort (BE)
(72) Inventor: RENSON, Thibault Louis, 8620 Nieuwpoort (BE)
(74) Representative: Brantsandpatents bv
(86) International application number: PCT/EP2023/050170
(87) International publication number: WO 2023/131643

(56) References cited:
- WO-A1-2013/067389
- US-A- 5 747 937
- US-A1- 2013 069 542

## Description

### FIELD OF THE INVENTION

The present invention relates to a method for detecting robustly and reliably occupancy.

### BACKGROUND

Luminaires with an integrated occupancy detector are known from the prior art. Such a device is described in US 10 502 899 (US '899). US '899 describes a luminaire for use in lighting a large open space such as a parking lot or deck of a parking garage. The luminaire includes a plurality of optical waveguides disposed in side-by-side relationship and together defining a closed path and at least one LED associated with each optical waveguide and disposed at a first end of the associated optical waveguide. The luminaire comprises a central enclosure. An infrared sensor may be supported in a lower opening of the central enclosure.

Also known is the device from US 9 441 634 (US '634). US '634 discloses an integrated ceiling device, including an electronics assembly and a mechanical arrangement. The mechanical arrangement includes a housing, a heat dissipating structure and support arms. The housing is configured to retain the electronics assembly. The heat dissipating structure includes a lamp seat for receiving a light source and a central opening surrounded by fins. The support arms extend between and interconnect the housing with the heat dissipating structure. The housing is positioned within the central opening and is spaced apart from the fins of the heat dissipating structure to enable free flow of air in an air gap between the housing and the heat dissipating structure. The electronics assembly may include a plurality of elements retained in the housing which are spaced apart from the heat dissipating structure. Such an element may be an occupancy sensor. The occupancy sensor is placed centrally in the bottom of the housing.

The infrared sensor or the occupancy sensor in the devices disclosed in US '899 and US '634 is placed centrally and is spatially separated from the light sources, both in horizontal and vertical direction, to avoid a negative influence by the light sources, by heat or by light radiation, on the correct functioning of the sensor. Heat is especially a problem in the case of a Passive Infra-Red sensor, as the heat will be captured by the sensor and could result in an incorrect detection of motion. The sensor is placed lower than the light sources to avoid direct impinging light from the light sources on the sensor and to obtain a big viewing angle for the sensor. Light, emitted by the light sources, that is directly or even indirectly impinging on the sensor could also result in an incorrect detection of motion, for instance when the light sources are switched on or off.

Therefore, it is not possible to hide the sensor and retain a robust and reliable occupancy detection. The sensor is always visible or its presence is at least indicated by the presence of a central part that is protruding from the device. A luminaire with a hidden sensor is desirable for aesthetic and/or security reasons.

US 5 747 937 describes a security light that has a quartz-halogen lamp, a photocell, a passive infrared sensor for detecting motion external to the security light, and a circuit which causes the quartz-halogen lamp to operate at about 50% of full brightness in the absence of detection of motion at night, to operate at 95% of full brightness for a predetermined time interval in response to detection of motion at night, and to be off while the photocell is detecting daylight. A switch allows the user to select a different mode of operation which is similar except that the lamp is kept off in the absence of detection of motion at night. A user-initiated override mode is also provided, which causes the lamp to continuously operate at 95% of full brightness until the photocell detects daylight or until the user disables the override mode.

US 2013/069542 describes embodiments of methods, apparatuses and systems for identifying an event are disclosed. One method includes sensing motion with a motion sensor, wherein the motion sensor is stationary, and the motion sensor senses motion of an object that is external to the motion sensor. The embodiment further includes matching the sensed motion with one of a plurality of stored patterns of events, and identifying an event associated with the sensed motion based on a match between a one of the plurality of patterns and the sensed motion. One apparatus includes a sensing device, wherein the sensing device includes a light sensor sensing motion and a processor. The processor is configured to match the sensed motion with one of a plurality of stored patterns of events, and identify an event associated with the sensed motion based on a match between a one of the plurality of patterns and the sensed motion.

WO 2013/067389 describes an ambient light sensor measures an ambient light level at one point in an illuminated environment, such as a warehouse, office, shop, cold-storage facility, or industrial facility, and provides an indication of the measured ambient light level to a processor. The processor maps the measured ambient light level to an estimated ambient light level at a different point in the illuminated environment from the measured ambient light level (e.g., a "task height" about three feet from a warehouse floor). The processor may determine the difference between the estimated ambient light level and a desired light level at the task height, and may change the artificial illumination provided by a light fixture to make the actual ambient light level at task height match the desired light level at the task height.

The aim of the invention is to provide a method which eliminates those disadvantages.

### SUMMARY OF THE INVENTION

In a first aspect, the present invention relates to a method according to claim 1. This method is beneficial because the output signal is filtered to remove transients in the output signal caused by switching off the light. These transients could be interpreted as occupancy, resulting in a false occupancy detection and an unwanted and potentially endless sequence of switching off and on the light source. By filtering the output signal, this unwanted and potentially endless sequence is avoided. The detection is robust and reliable. This enables the use of a hidden occupancy detector, which is advantageous for aesthetic and/or security reasons, for instance if an appealing luminaire is wanted and/or if the presence or precise location of an occupancy detector has to be hidden to avoid tampering.

Preferred embodiments of the method are shown in any of the claims 2 to 10.

### DESCRIPTION OF FIGURES

**Figure 1** shows a sectional view of a recessed luminaire, suited for execution of a method according to an embodiment of the present invention.
**Figure 2** shows a perspective view of a recessed luminaire, suited for execution of a method according to an embodiment of the present invention.
**Figure 3** shows a sectional view of a recessed luminaire, suited for execution of a method according to an embodiment of the present invention, wherein the recessed luminaire is installed in a tubular housing.
**Figure 4** shows a sectional view of a recessed luminaire, suited for execution of a method according to an embodiment of the present invention, showing the air flow through the at least one air channel at the first level and the at least one air channel at the second level.
**Figure 5** shows a perspective view of a cylindrical body of a recessed luminaire, suited for execution of a method according to an embodiment of the present invention, showing the air flow through the at least one air channel at the first level and the at least one air channel at the second level.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise.
"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments.

In the context of this document LED means Light Emitting Diode.

For the remainder of this document the abbreviation PIR means Passive Infra-Red.

In the context of this document HDPE means High Density Poly-Ethylene. It has a density of at least 940 kg/m³.

In a first aspect, the invention relates to a method for detecting occupancy.

In a preferred embodiment the method comprises the steps of:
- reading an output signal of an occupancy detector;
- setting an output on detection of occupancy in the output signal of the occupancy detector; and
- clearing the output when no occupancy is detected during a predetermined period.

Said output is preferably an output pin or output terminal of a processing unit, like a controller, PLC or other suitable means. It is clear for a person of ordinary skill in the art, that the output can set as an active low signal, an active high signal or a certain waveform.

The occupancy detector comprises an output terminal. The output signal on the output terminal is indicative for detection of occupancy.

The occupancy detector is a PIR sensor. The occupancy detector is comprised in a luminaire. The luminaire comprises further a housing and a light source. The output signal is an analogue signal. A PIR sensor is beneficial compared to an occupancy detector based on for instance radar, because infra-red rays are blocked by obstacles, avoiding false detections of occupancy because a person is passing by in a neighboring space.

The analogue signal is an amplitude modulated signal. The signal has a DC offset value when no occupancy is detected. A sine wave is modulated on top of the DC offset value when occupancy is detected. The sine wave has an amplitude corresponding to an amount of motion that is detected by the PIR sensor. The amplitude of the sine wave is at least 55% of the DC offset value.

For instance, the DC offset value is 1.1 V. The sine wave reaches a maximum voltage level of at least 1.9 V during occupancy detection. The amplitude of the sine wave during occupancy detection is 0.8 V, being 72% of the DC offset value.

The output signal of the occupancy sensor is filtered during a period of at least 0.1 s and at most 10 s after switching off the light source. The light source can be switched off when no occupancy is detected by the occupancy detector or can be switched off by an external system and/or device, as described in following embodiments. Preferably, the output signal of the occupancy sensor is filtered during a period of at least 0.5 s after switching off the light source. Preferably, the output signal of the occupancy sensor is filtered during a period of at most 5 s after switching off the light source. The output signal is filtered to remove transients in the output signal caused by switching off the light. These transients could for instance be interpreted as occupancy, resulting in a false occupancy detection and an unwanted and potentially endless sequence of switching off and on the light source in case the output signal is used for switching on and off the light source or could for instance result in a false detection of burglary, as described in following embodiments. By filtering the output signal, this unwanted and potentially endless sequence or false detection of burglary is avoided. Filtering the output signal during a period after switching off the light source reduces only temporary the sensitivity of the output detection. The output detection is not deactivated during this period. After expiration of the period, a sensitive detection of occupancy is again possible. This is beneficial because less motion needs to be detected by the PIR sensor for occupancy detection.

The output signal of the occupancy detector is preferably filtered by said processing unit.

In a preferred embodiment, the output signal of the occupancy sensor is filtered during a period of at least 0.1 s and at most 10 s after switching on the light source. Preferably, the output signal of the occupancy sensor is filtered during a period of at least 0.5 s after switching on the light source. Preferably, the output signal of the occupancy sensor is filtered during a period of at most 5 s after switching on the light source. The output signal is filtered to remove transients in the output signal caused by switching on the light source. These transients could be interpreted as occupancy, resulting in a false occupancy detection. The false occupancy detection could result in unwanted actions by external systems, as described in later embodiments. By filtering the output signal during a period of at least 0.1 s and at most 10 s after switching on the light source, these unwanted actions are avoided.

In a further embodiment the output signal is amplitude filtered. The output signal is amplitude filtered during the previously described period. A predetermined threshold is applied on the output signal. If the output signal is not higher than the threshold, the output signal is ignored. This results in a temporary reduction of the sensitivity of the occupancy detection.

In a preferred embodiment the output signal is filtered with a matched filter. A matched filter is beneficial to detect presence of a known signal in the output signal. For instance, if transients caused by switching off the light are always very similar, the transients could be the known signal to be detected in the output signal. If the known signal is detected, this known signal can be subtracted from the output signal and further processed to detect occupancy.

It is clear for a skilled person in the art that this embodiment can be beneficially combined with a previously described embodiment in which the output signal is amplitude filtered.

In a preferred embodiment, the luminaire is a recessed luminaire.

The housing of the recessed luminaire is preferably cylindrical. The housing comprises two circular ends, perpendicular to a longitudinal axis of the housing. A cylindrical housing is advantageous for recessed installation because the housing is installable in a hole that is drilled in a wall, ceiling or floor surface.

In a preferred embodiment, the occupancy detector is used to switch on and off the light source of the luminaire

This is advantageous because no separate occupancy detector is required for switching on and off the light source of the luminaire. The occupancy detector is integrated in the luminaire. This is possible because light emitted by the light source of the luminaire and impinging on the occupancy detector will not result in a false occupancy detection and an unwanted and potentially endless sequence of switching off and on the light source thanks to execution of the method.

In a preferred embodiment, the housing comprises a cylindrical body. The cylindrical body is preferably a metal cylindrical body. The cylindrical body comprises a first end and a second end. The first and the second end are circular. The first and the second end are opposite. The first end and the second end are perpendicular to a longitudinal axis of the cylindrical body. The longitudinal axis is the axis of the cylinder. The first end and the second end are ground planes of the cylindrical body. The longitudinal axis of the cylindrical body is parallel with the longitudinal axis of the housing. Preferably the longitudinal axis of the cylindrical body is coinciding with the longitudinal axis of the housing.

The cylindrical body comprises a first cavity at the first end. The first cavity has preferably a cylindrical or conical shape. The first cavity has a longitudinal axis that is parallel with the longitudinal axis of the cylindrical body. Preferably the longitudinal axis of the first cavity is coinciding with the longitudinal axis of the cylindrical body.

The cylindrical body comprises a first opening at the first end to the first cavity. The first opening is an open end of the cylindrical or conical shape of the first cavity. In case of a conical shape of the first cavity, the open end of the first cavity has preferably a bigger surface than an opposite end of the first cavity. This is beneficial for easy manufacturing and for installation of components inside the first cavity. In case of a conical shape of the first cavity, side walls of the first cavity make an angle of at least 1° and at most 5° with the open end of the first cavity. The opposite end of the first cavity is preferably parallel with the open end of the first cavity.

The light source comprises multiple LEDs. The LEDs are placed on a mounting surface. Preferably the LEDs are placed in a regular pattern on the mounting surface, for instance in a raster, in a square, in a circle or another suitable pattern. The mounting surface is a surface of the cylindrical body inside the first cavity. The mounting surface is parallel to a ground plane of the cylindrical body. Preferably the mounting surface is the opposite end of the first cavity. The first opening is a light exit port for light emitted by the LEDs. The first opening is also beneficial for installing the LEDs inside the first cavity. The LEDs are preferably installed on one or more PCBs that are screwed or glued on to the mounting surface. Optionally a thermal paste is applied between the PCBs and the mounting surface. Placing the LEDs directly on a surface of the cylindrical body is beneficial to transfer heat directly from the LEDs to the cylindrical body, resulting in a lower ambient temperature for the LEDs, increasing the reliability and consequently life time of the LEDs. This is especially advantageous to avoid that heat produced by the LEDs increases the ambient temperature for the occupancy detector or the temperature of the occupancy detector itself. This is beneficial for a robust and reliable detection of occupancy.

The mounting surface comprises a recess. The recess has preferably a cylindrical shape. This is beneficial for easy manufacturing. The recess can be created by drilling a hole in the cylindrical body. A longitudinal axis of the recess is parallel with the longitudinal axis of the cylindrical body. Preferably the longitudinal axis of the recess is coinciding with the longitudinal axis of the cylindrical body.

The occupancy sensor is a PIR sensor. A PIR sensor is advantageous for obtaining a sufficient viewing angle with the occupancy detector while the occupancy detector is installed in the recess. The LEDs are placed around the occupancy detector. The occupancy detector is preferably placed centrally between the LEDs. This is beneficial to hide the presence of the occupancy detector, especially when the LEDs are lit. The occupancy detector is installed inside the recess. The occupancy detector has preferably a circular cross section. The occupancy detector comprises an output terminal. An output signal on the output terminal is indicative for detection of occupancy. For instance, the output signal is a digital signal. The digital signal is low when no occupancy is detected and high when occupancy is detected or vice versa. For instance, the output signal is an analogue signal. The amplitude and/or frequency of the analogue signal is modulated in function of detection of occupancy. It is clear for a skilled person in the art that other encodings or modulations of the output signal are possible.

The viewing angle of the PIR sensor when installed in the recess is at least 20°, preferably at least 25°, more preferably at least 30°, even more preferably at least 35° and most preferably at least 40°. These viewing angles are beneficial because these correspond with typical angles for a beam of light from a typical luminaire. This means that occupancy is at least detected when a person is inside the beam of light from a luminaire. A PIR sensor is additionally beneficial compared to an occupancy detector based on for instance radar, because infra-red rays are blocked by obstacles, avoiding false detections of occupancy because a person is passing by in a neighboring space.

The PIR sensor is protruding at most 4 mm from the mounting surface. The PIR sensor is preferably protruding at most 3 mm from the mounting surface, more preferably at most 2 mm and even more preferably at most 1 mm. Because the PIR sensor is protruding at most 4 mm from the mounting surface, light emitted by the LEDs will not strike the PIR sensor directly. This avoids disturbance of the correct functioning of the PIR sensor and results in a robust and reliable detection of occupancy. This is additionally advantageous because the PIR sensor will not block light emitted by the LEDs, causing shadows. Such shadows give away that an occupancy detector is integrated in the luminaire.

The housing comprises a semi-transparent diffuser. The diffuser is preferably placed at the first opening of the first cavity. The diffuser is preferably a circular disk. The longitudinal axis of the cylindrical body is preferably perpendicular to the diffuser. A semi-transparent diffuser is beneficial to diffuse the light emitted by the individual LEDs. Because the light is diffused, the light appears to be originating from a source covering the whole first opening. This avoids that a dark spot appears in the center of the first opening, opposite to the occupancy detector. Such a dark spot would give away that an occupancy detector is integrated in the luminaire. A semi-transparent diffuser is additionally beneficial because it hides the occupancy detector when the light source is not switched on.

The diffuser is of infrared permeable material. An infrared permeable material for the diffuser is transparent for infra-red radiation. This is especially beneficial because the occupancy detector is a PIR sensor and consequently the diffuser does not hinder the correct functioning of the occupancy detector. The permeable material is preferably HDPE.

This preferred embodiment is advantageous because the presence of the occupancy detector is not given away by a central part that is protruding from the luminaire. The luminaire is additionally advantageous because when the LEDs are emitting light, the occupancy detector is completely invisible by the emitted light. A negative influence by heat on a correct functioning of the occupancy detector is avoided because the LEDs are placed on the mounting surface inside the first cavity. Heat produced by the LEDs is dissipated directly in the cylindrical body. The diffuser is beneficial to hide the occupancy detector when the LEDs are switched off. A diffuser of infrared permeable material is beneficial because it does not hinder the correct functioning of the occupancy detector.

Execution of the method with the use of a luminaire according to the current embodiment is advantageous for a robust and reliable detection of occupancy with a hidden occupancy detector, because a negative influence by heat on a correct functioning of the occupancy detector is avoided.

In a further embodiment the cylindrical body comprises at least two air channels at the first level and at least two air channels at the second level.

Preferably the cylindrical body comprises at least three air channels at the first level, more preferably at least four air channels and even more preferably at least five air channels.

Preferably the cylindrical body comprises at least three air channels at the second level, more preferably at least four air channels and even more preferably at least five air channels.

The air channels at the first level are preferably equally distributed over the side wall of the cylindrical body. The air channels at the second level are preferably equally distributed over the side wall of the cylindrical body. At least two air channels at the first level and at least two air channels at the second level are beneficial for obtaining an air flow that spreads equally over the whole mounting surface, resulting in good cooling of the LEDs.

Execution of the method with the use of a luminaire according to the current embodiment is advantageous for a robust and reliable detection of occupancy with a hidden occupancy detector, because a risk on negative influence by heat on a correct functioning of the occupancy detector is further reduced.

In a preferred embodiment light intensity of a light source of a luminaire is reduced when a period during which the light source is switched on exceeds a predetermined duration threshold. The luminaire comprises an occupancy detector and optionally at least one electronic module. The predetermined duration is a period of 15 minutes up to 3 hours and every value in between. The predetermined duration can be defined in periods of 1 minute. The light intensity is reduced with at least 20%, preferably at least 30%, more preferably at least 40%, even more preferably at least 50% and most preferably at least 60%. This embodiment is beneficial to avoid overheating of the luminaire when the light source is switched on during a long period, what would reduce robustness and reliability of occupancy detection with the occupancy detector and the lifetime of the occupancy detector and the at least one electronic module.

For instance, the electrical current flowing to a LED of a luminaire is reduced after 30 minutes from 180 mA to 120 mA.

In a preferred embodiment light intensity of a light source of a luminaire is reduced when a temperature inside the luminaire is measured that exceeds a predetermined temperature threshold. The luminaire comprises a temperature sensor. The predetermined temperature threshold is at most 90°C, preferably at most 80°C, more preferably at most 75°C and most preferably at most 65°C. This embodiment is beneficial to avoid overheating of the luminaire when the light source is switched on even during a short period, what would reduce robustness and reliability of occupancy detection with the occupancy detector and the lifetime of the occupancy detector and the at least one electronic module.

In a preferred embodiment the output, which is set based on the filtered output signal of the occupancy detector of a luminaire, is coupled with an external system and/or device, the external system and/or device being external to the luminaire. This means that the external system is not integrated in the luminaire. Preferably the external system is at a different physical location than the luminaire. This embodiment is advantageous for switching on and off other light sources, external to the luminaire, for instance other luminaires without occupancy detector, or for switching on and off other functionalities, like for instance music, or for instance to signal intruders to a burglar alarm, or for instance to start and stop a ventilation system in a room. It is clear for these examples that no output should be set when the light is switched on or off, to avoid for instance that the music starts or stops unwanted or that a burglar alarm is generated by switching on and off the light source of the luminaire or that the ventilation system is running when no person is inside the room.

In a preferred embodiment, a light source of a luminaire is switched on and off by an external system and/or device, the external system and/or device being external to the luminaire. This means that the external system is not integrated in the luminaire. Preferably the external system is at a different physical location than the luminaire. Preferably the light source of the luminaire can be switched on and off by the external system and/or device and directly by the output, which is set based on the filtered output signal of the occupancy detector. Alternatively, the light source of the luminaire cannot be switched on and off directly by the occupancy detector. In that case the output, based on the filtered signal of the occupancy detector, is coupled to the external system, as described in a previous embodiment of the method.

This embodiment is especially advantageous for switching on and off the light source of the luminaire based on other inputs than occupancy, for instance when pushing a button or when reaching a predefined time.

It is clear for these examples that no output should be generated when the light is switched on or off, to avoid for instance that the music starts or stops unwanted or that a burglar alarm is generated by switching on and off the light source of the luminaire.

In a preferred embodiment, ambient light is measured in a room, wherein the luminaire is installed in said room. The light source is not switched on when the measured ambient light is above a predefined value. The ambient light is measured with an ambient light sensor, suited for measuring ambient light. The ambient light sensor is preferably integrated in the luminaire. Alternatively, the ambient light sensor is an external sensor, being external to the luminaire. In that case, the light source of the luminaire is preferably switched on and off by an external system, as described in a previous described embodiment. This embodiment is advantageous to avoid unnecessary use of the light source, resulting in energy savings.

In a preferred embodiment the light source brightens gradually from an off state to a maximum light intensity of the light source during a period of at least 200 ms when switching on and/or the light source dims gradually from the maximum light intensity to the off state of the light source during a period of at least 200 ms when switching off. Preferably said period is at least 500 ms, more preferably at least 750 ms, even more preferably at least 1000 ms and most preferably at least 1500 ms. The off state is a state wherein the light source is not emitting light. The maximum light intensity is the light intensity emitted by the light at its maximum specified power. An electrical power supplied to the light source increases, respectively decreases preferably linearly during said period. Alternatively, the light intensity increases, respectively decreases preferably linearly during said period. The output signal of the occupancy sensor is filtered during a period of at least 1.5 s after switching on the light source when switching on the light source. The output signal of the occupancy sensor is filtered during a period of at least 1.5 s after switching off the light source when switching off the light source.

The applicant surprisingly found that also important transients on the output signal of the occupancy detector occurred while the light source brightens gradually from the off state to the maximum light intensity and while the light source dims gradually from the maximum light intensity to the off state. These transients were not expected because the light intensity changes gradually. The transients observed lasted longer than when the light source was switched on or off immediately, meaning within a period of less than 20 ms. Filtering the output signal of the occupancy sensor during a period of at least 1.5 s is in this case beneficial to avoid incorrect detection of occupancy due to said transients on the output signal of the occupancy detector.

The invention is further described by the following non-limiting figures which further illustrate the invention, and are not intended to, nor should they be interpreted to, limit the scope of the invention, as defined by the appended claims.

### DESCRIPTION OF FIGURES

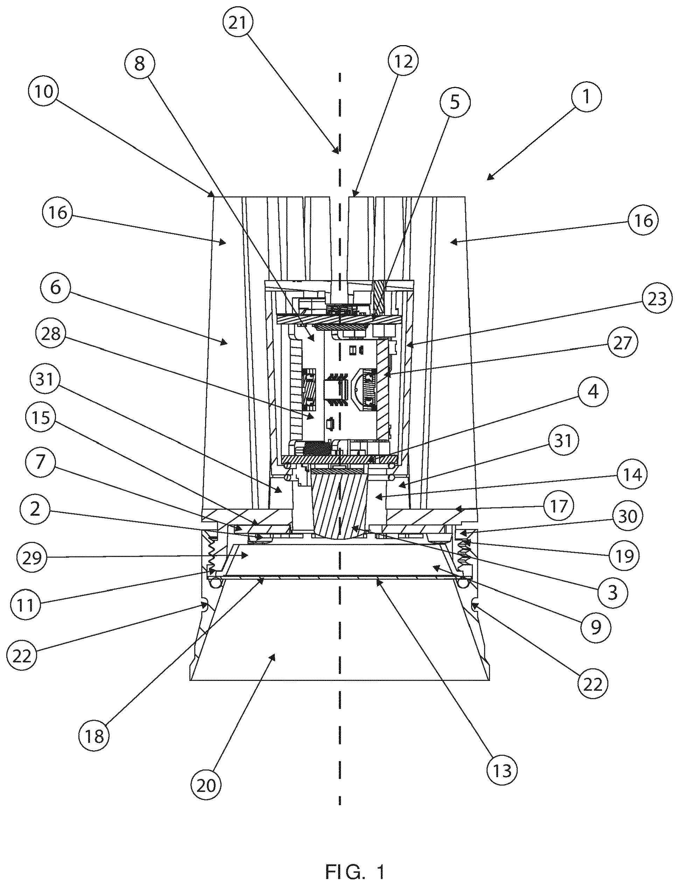

**Figure 1** shows a sectional view of a recessed luminaire, suited for execution of a method according to an embodiment of the present invention.

The recessed luminaire (1) comprises a housing, a light source, an occupancy detector (3), a first electronic module (4), a second electronic module (5) a third electronic module (27) and a fourth electronic module (28). The housing comprises a metal cylindrical body (6) and a first conical reflector (20). The metal cylindrical body (6) and the first conical reflector (20) comprise a screw-thread (19) for screwing the first conical reflector (20) on the cylindrical body (6). A second conical reflector (29) is clamped in between the cylindrical body (6) and the first conical reflector (20). The cylindrical body (6) comprises a first cavity (9) at a first end (11) of the cylindrical body (6) and a second cavity (8) at a second end (10), opposite to the first end (11). The first cavity (9) and the second cavity (8) have a conical shape. The cylindrical body (6) comprises a first opening (13) at the first end (11) to the first cavity (9) and a second opening (12) at the second end (10) to the second cavity (8). The cylindrical body (6) comprises a recess (14). The recess (14) is a passage between the first cavity (9) and the second cavity (8). The recess (14) has a cylindrical shape. The cylindrical body (6), the first cavity (9), the second cavity (8) and the recess (14) have a common longitudinal axis (21). The first opening (13) and the second opening (12) are circular and perpendicular to the longitudinal axis (21). The cylindrical body (6) comprises radial metal fins (16), extending from an intermediate surface (17) of the cylindrical body (6) along the second cavity (8) up to the second end (10) of the cylindrical body (6). The cylindrical body (6) comprises at least one air channel (30) at a first level. The at least one air channel (30) at the first level extends from a side wall of the cylindrical body into the first cavity (9). The cylindrical body (6) comprises at least one air channel (31) at a second level. The at least one air channel (31) at the second level extends from a side wall of the cylindrical body into the recess (14). The housing comprises a semi-transparent diffuser (18) at the first end (11) of the cylindrical body (6). The housing comprises an annular groove (22) on an outer circumference of the reflector (20) for installing the housing inside a tube. The annular coil spring (24) is missing. The light source comprises multiple LEDs (2), placed in a circle on a PCB (7) on a mounting surface (15). The mounting surface (15) is a circular surface of the cylindrical body (6) inside the first cavity (9). The mounting surface (15) is parallel and opposite to the first opening (13). The first opening (13) is a ground plane of the cylindrical body (6). The occupancy detector (3) is a PIR sensor. The occupancy detector (3) is installed inside the recess (14). The occupancy detector (3) is placed on the first electronic module (4). The first electronic module (4), the second electronic module (5), the third electronic module (27) and the fourth electronic module (28) are installed in plastic container (23) in the second cavity (8). The first electronic module (4) and the second electronic module (5) are stacked in a direction parallel to the longitudinal axis (21) inside the second cavity (8). The first electronic module (4) and the second module (5) are connected to each other by the third electronic module (27) and the fourth electronic module (28). The first electronic module (4) and the second electronic module (5) are equally spread inside the plastic container (23). The second electronic module (5) comprises a processing unit and a memory.

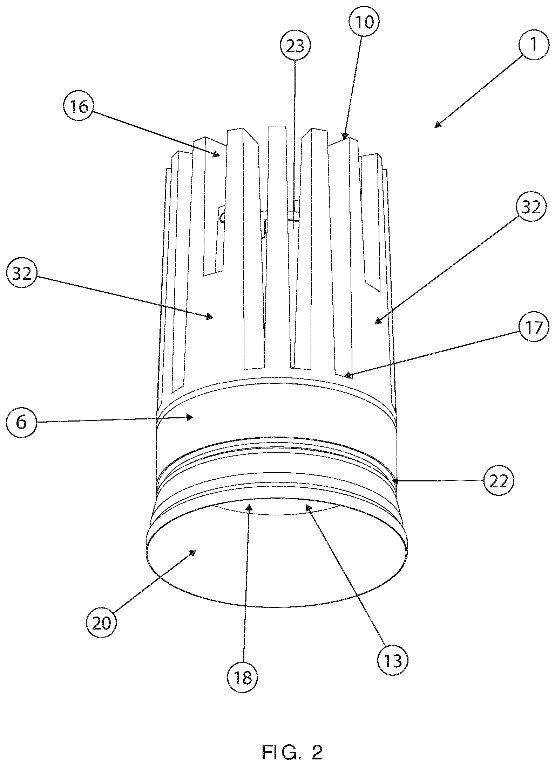

**Figure 2** shows a perspective view of a recessed luminaire, suited for execution of a method according to an embodiment of the present invention.

The recessed luminaire (1) is equal to the recessed luminaire (1) in Figure 1. The intermediate surface (17) is clearly visible on Figure 2. The intermediate surface (17) is a circular cross section of the cylindrical body (6) perpendicular to the longitudinal axis (21). The intermediate surface (17) is positioned at least past the first cavity (9), seen from the first end (11) in the direction of the second end (10). Also visible on Figure 2 are contact points (32) on side walls of the cylindrical body (6) for the plastic container (23).

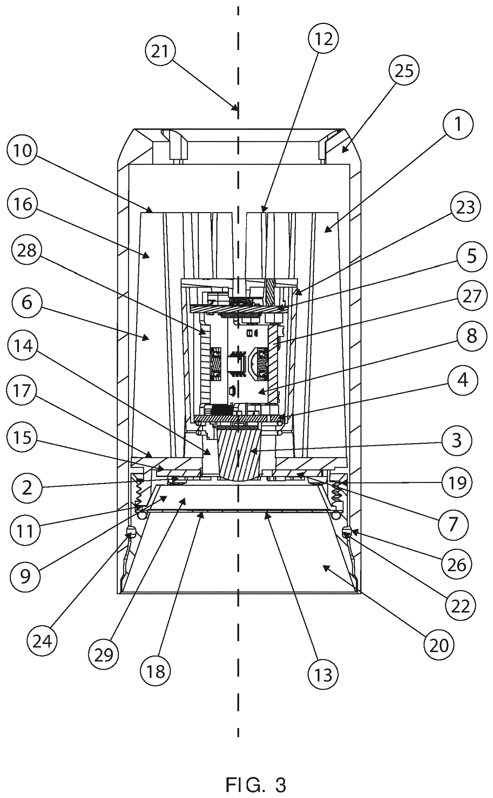

**Figure 3** shows a sectional view of a recessed luminaire, suited for execution of a method according to an embodiment of the present invention, wherein the recessed luminaire is installed in a tubular housing.

The recessed luminaire (1) is equal to the recessed luminaire (1) in Figure 1. The recessed luminaire (1) is installed in a tubular housing (25) of a pendant light or a ceiling mounted light. The tubular housing comprises at an inner circumference a complementary annular groove (26). The recessed luminaire (1) is attached to the tubular housing (25) by an annular coil spring (24).

A complementary groove is foreseen at an inner circumference of the ventilation duct or the tubular housing of the pendant light or ceiling mounted light.

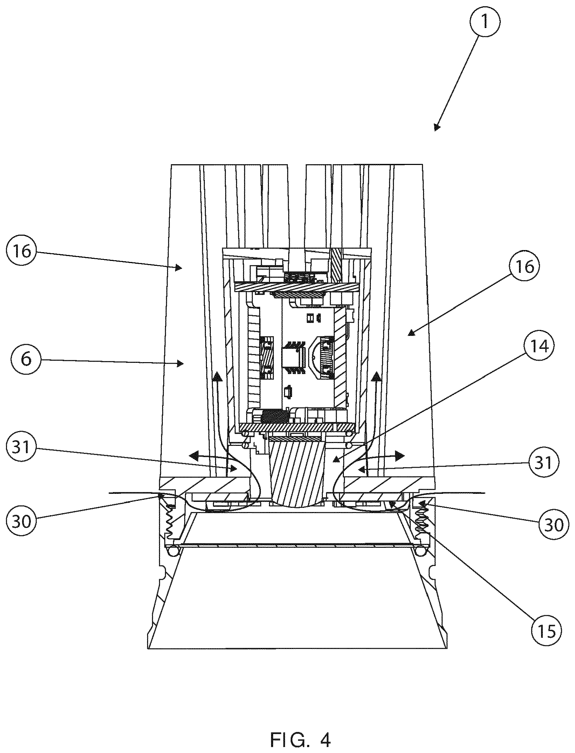

**Figure 4** shows a sectional view of a recessed luminaire, suited for execution of a method according to an embodiment of the present invention, showing the air flow through the at least one air channel at the first level and the at least one air channel at the second level.

The recessed luminaire (1) is equal to the recessed luminaire (1) in Figure 1. Arrows on Figure 4 indicate an air flow entering through the at least one air channel (30) at the first level, over the mounting surface (15), through the recess (14) and exiting through the at last one air channel (31) at the second level. The air flow continues towards side walls of the cylindrical body (6) and along the metal fins (16) towards the second end (10) of the cylindrical body (6).

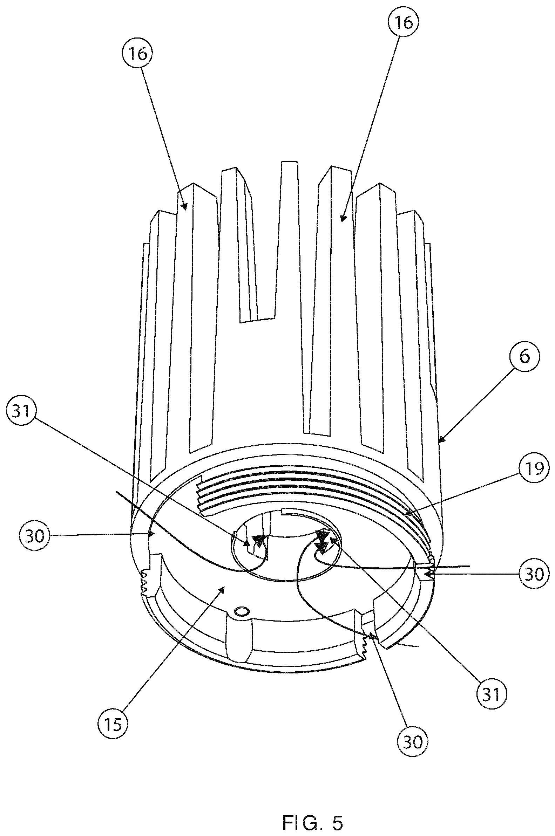

**Figure 5** shows a perspective view of a cylindrical body of a recessed luminaire, suited for execution of a method according to an embodiment of the present invention, showing the air flow through the at least one air channel at the first level and the at least one air channel at the second level.

The cylindrical body (6) is equal to the cylindrical body (6) of the recessed luminaire (1) in Figure 1. Figure 5 shows how the at least one air channel (30) at the first level is formed by a cut-out in the screw-thread (19) of the cylindrical body (6). Arrows on Figure 5 indicate an air flow entering through the at least one air channel (30) at the first level, over the mounting surface (15), through the recess (14) and exiting through the at last one air channel (31) at the second level.

The numbered elements in the figures are:
1. Recessed luminaire
2. LED
3. Occupancy detector
4. First electronic module
5. Second electronic module
6. Metal cylindrical body
7. PCB
8. Second cavity
9. First cavity
10. Second end
11. First end
12. Second opening
13. First opening
14. Recess
15. Mounting surface
16. Radial metal fins
17. Intermediate surface
18. Diffuser
19. Screw-thread
20. First conical reflector
21. Longitudinal axis
22. Annular groove
23. Plastic container
24. Annular coil spring
25. Tubular housing
26. Complementary annular groove
27. Third electronic module
28. Fourth electronic module
29. Second conical reflector
30. Air channel at first level
31. Air channel at second level
32. Contact points

## Claims

1. Method for detecting occupancy comprising:
- reading an output signal of an occupancy detector (3), wherein the occupancy detector (3) is a Passive Infra-Red sensor, wherein the occupancy detector (3) is comprised in a luminaire (1), wherein the luminaire (1) comprises further a housing and a light source, and wherein the output signal is an analogue signal;
- setting an output on detection of occupancy in the output signal of the occupancy detector;
- clearing the output when no occupancy is detected during a predetermined period;
**characterized in that** the output signal of the occupancy sensor (3) is filtered during a period of at least 0.1 s and at most 10 s after switching off the light source.

2. Method according to claim 1, **wherein** the output signal of the occupancy sensor (3) is filtered during a period of at least 0.1 s and at most 10 s after switching on the light source.

3. Method according to claim 1 or 2, **wherein** the output signal is amplitude filtered.

4. Method according to any of the claims 1-3, **wherein** the output signal is filtered with a matched filter.

5. Method according to any of the claims 1-4, **wherein** the output signal of the occupancy sensor (3) is used for switching on and off the light source of the luminaire (1).

6. Method according to any of the claims 1-5, **wherein** light intensity of the light source of the luminaire (1) is reduced when a period during which the light source is switched on exceeds a predetermined duration threshold.

7. Method according to any of the claims 1-6, **wherein** light intensity of the light source of the luminaire (1) is reduced when a temperature inside the luminaire (1) is measured that exceeds a predetermined temperature threshold.

8. Method according to any of the claims 4-7, wherein the light source of the luminaire is switched on and off by an external system and/or device, the external system and/or device being external to the luminaire.

9. Method according to any of the claims 1-8, wherein ambient light is measured in a room, wherein the luminaire (1) is installed in said room and wherein the light source is not switched on when the measured ambient light is above a predefined value.

10. Method according to any of the claims 1-9, wherein the light source brightens gradually from an off state to a maximum light intensity of the light source during a period of at least 200 ms when switching on and/or wherein the light source dims gradually from the maximum light intensity to the off state of the light source during a period of at least 200 ms when switching off, wherein the output signal of the occupancy sensor (3) is filtered during a period of at least 1.5 s and at most 10 s after respectively switching on and/or switching off the light source.

## Patentansprüche

1. Verfahren zum Erkennen von Belegung, umfassend:
- Lesen eines Ausgabesignals eines Belegungsdetektors (3), wobei der Belegungsdetektor (3) ein passiver Infrarotsensor ist, wobei der Belegungsdetektor (3) in einem Beleuchtungskörper (1) enthalten ist, wobei der Beleuchtungskörper (1) ferner ein Gehäuse und eine Lichtquelle umfasst, und wobei das Ausgabesignal ein analoges Signal ist,
- Einstellen einer Ausgabe bei Erkennen von Belegung in dem Ausgabesignal des Belegungsdetektors,
- Löschen der Ausgabe, wenn während einer festgelegten Zeitspanne keine Belegung erkannt wird,
**dadurch gekennzeichnet, dass** das Ausgabesignal des Belegungssensors (3) während einer Zeitspanne von mindestens 0,1 s und höchstens 10 s nach dem Ausschalten der Lichtquelle gefiltert wird.

2. Verfahren nach Anspruch 1, **wobei** das Ausgabesignal des Belegungssensors (3) während einer Zeitspanne von mindestens 0,1 s und höchstens 10 s nach dem Anschalten der Lichtquelle gefiltert wird.

3. Verfahren nach Anspruch 1 oder 2, **wobei** das Ausgabesignal amplitudengefiltert wird.

4. Verfahren nach einem der Ansprüche 1 - 3, **wobei** das Ausgabesignal mit einem Optimalfilter gefiltert wird.

5. Verfahren nach einem der Ansprüche 1 - 4, **wobei** das Ausgabesignal des Belegungssensors (3) zum An- und Ausschalten der Lichtquelle des Leuchtkörpers (1) verwendet wird.

6. Verfahren nach einem der Ansprüche 1 - 5, **wobei** die Lichtintensität der Lichtquelle des Leuchtkörpers (1) reduziert wird, wenn eine Zeitspanne, in der die Lichtquelle angeschaltet ist, einen festgelegten Schwellenwert für die Zeitspanne überschreitet.

7. Verfahren nach einem der Ansprüche 1 - 6, **wobei** die Lichtintensität der Lichtquelle des Leuchtkörpers (1) reduziert wird, wenn eine Temperatur im Inneren des Leuchtkörpers (1) gemessen wird, die einen festgelegten Schwellenwert für die Temperatur überschreitet.

8. Verfahren nach einem der Ansprüche 4 - 7, wobei die Lichtquelle des Leuchtkörpers (1) durch ein externes System und/oder Gerät an- und ausgeschaltet wird, wobei sich das externe System und/oder Gerät extern des Leuchtkörpers (1) befindet.

9. Verfahren nach einem der Ansprüche 1 - 8, wobei Umgebungslicht in einem Raum gemessen wird, wobei der Leuchtkörper (1) in dem Raum installiert ist und wobei die Lichtquelle nicht angeschaltet wird, wenn das gemessene Umgebungslicht über einem vordefinierten Wert liegt.

10. Verfahren nach einem der Ansprüche 1 - 9, wobei sich die Helligkeit der Lichtquelle während einer Zeitspanne von mindestens 200 ms von einem ausgeschalteten Zustand schrittweise auf eine maximale Lichtintensität der Lichtquelle erhöht, wenn sie angeschaltet wird, und/oder wobei die Lichtquelle während einer Zeitspanne von mindestens 200 ms von der maximalen Lichtintensität schrittweise in den ausgeschalteten Zustand der Lichtquelle gedimmt wird, wenn die ausgeschaltet wird, wobei das Ausgabesignal des Belegungssensors (3) während einer Zeitspanne von mindestens 1,5 s und höchstens 10 s nach dem Anbeziehungsweise Ausschalten der Lichtquelle gefiltert wird.

## Revendications

1. Procédé de détection d'occupation comprenant :
- la lecture d'un signal de sortie d'un détecteur d'occupation (3), dans lequel le détecteur d'occupation (3) est un capteur infrarouge passif, dans lequel le détecteur d'occupation (3) est compris dans un luminaire (1), dans lequel le luminaire (1) comprend en outre un boîtier et une source lumineuse, et dans lequel le signal de sortie est un signal analogique;
- l'établissement d'une sortie lors de la détection d'occupation dans le signal de sortie du détecteur d'occupation;
- l'effacement de la sortie lorsqu'aucune occupation n'est détectée pendant une période prédéterminée;
**caractérisée en ce que** le signal de sortie du capteur de présence (3) est filtré pendant une période d'au moins 0.1 s et d'au plus 10 s après l'extinction de la source lumineuse.

2. Procédé selon la revendication 1, **dans lequel** le signal de sortie du capteur d'occupation (3) est filtré pendant une période d'au moins 0.1 s et d'au plus 10 s après l'allumage de la source lumineuse.

3. Procédé selon la revendication 1 ou 2, **dans lequel** le signal de sortie est filtré en amplitude.

4. Procédé selon l'une quelconque des revendications 1 à 3, **dans lequel** le signal de sortie est filtré à l'aide d'un filtre adapté.

5. Procédé selon l'une quelconque des revendications 1 à 4, **dans lequel** le signal de sortie du capteur d'occupation (3) est utilisé pour allumer et éteindre la source lumineuse du luminaire (1).

6. Procédé selon l'une quelconque des revendications 1 à 5, **dans lequel** l'intensité lumineuse de la source lumineuse du luminaire (1) est réduite lorsqu'une période pendant laquelle la source lumineuse est allumée dépasse un seuil de durée prédéterminé.

7. Procédé selon l'une quelconque des revendications 1 à 6, **dans lequel** l'intensité lumineuse de la source lumineuse du luminaire (1) est réduite lorsqu'une température à l'intérieur du luminaire (1) supérieure à un seuil de température prédéterminé est mesurée.

8. Procédé selon l'une quelconque des revendications 4 à 7, dans lequel la source lumineuse du luminaire est allumée et éteinte par un système et/ou un dispositif externe, le système externe et/ou le dispositif externe étant externe au luminaire.

9. Procédé selon l'une quelconque des revendications 1 à 8, dans lequel la lumière ambiante est mesurée dans une pièce, dans lequel le luminaire (1) est installé dans ladite pièce et dans lequel la source lumineuse n'est pas allumée lorsque la lumière ambiante mesurée est supérieure à une valeur prédéfinie.

10. Procédé selon l'une quelconque des revendications 1 à 9, dans lequel la source lumineuse s'éclaircit progressivement depuis un état éteint jusqu'à une intensité lumineuse maximale de la source lumineuse pendant une période d'au moins 200 ms lors de la mise en marche et/ou dans lequel la source lumineuse s'assombrit progressivement depuis l'intensité lumineuse maximale jusqu'à l'état éteint de la source lumineuse pendant une période d'au moins 200 ms lors de la mise hors tension, dans lequel le signal de sortie du capteur d'occupation (3) est filtré pendant une période d'au moins 1,5 s et d'au plus 10 s après respectivement l'allumage et/ou l'extinction de la source lumineuse.
